# EUROPEAN PATENT APPLICATION

(11) **EP 1 494 123 A1**
(43) Date of publication of application: **05.01.2005**
(21) Application number: 03291664.5
(22) Date of filing: 04.07.2003
(51) Int. Cl.: G06F 13/40, G06F 11/30, G06F 1/20

(54) **Computer systems**

(71) Applicant: Hewlett-Packard Development Company, L.P., Houston, Texas 77070 (US)
(72) Inventor: Meynard, Olivier, 38220 Vizille (FR); Greco, David, 38760 Varces (FR)
(74) Representative: Lloyd, Richard Graham

(57) **Abstract**

The present invention relates to computer systems. An embodiment provides an arrangement for a computer system; the arrangement comprising at least one terminal to provide dynamic information relating to an operating characteristic of the arrangement; and circuitry, using the at least one terminal, to produce an output signal bearing the dynamic information associated with the operating characteristic of the arrangement.

## Description

### Field of the Invention

The present invention relates to computer systems and, more particularly, to computer systems incorporating, for example, power or cooling management.

### Background to the Invention

Computers can be configured according to a myriad of configuration possibilities. These configurations encompass entry level configurations with almost no add-in cards in situ or a heavy, or fully loaded, configuration that might accommodate a significant number of PCI or AGP cards. Since each card can consume, up to 25Watts or add to the power budget for the PCI bus, adding such cards can impose an increased load on the PSU, which has associated power delivery issues, and also increase the cooling requirements imposed on the cooling system of the computer system.

The PCI SIG organisation introduced two pins, PRSNT [1:2], on each card to allow that card to signal to the motherboard, and, ultimately, the cooling system or power supply, its maximum power or cooling requirements. Using this information, the computer system can identify situations in which the PSU might be overloaded or adjust the cooling system to increase or reduce the effective cooling. The information provided by the two pins is fixed and time invariant.

Therefore, assuming, for example, that the AGP card comprises a high power video processor that has a high power consumption only during computationally intensive 3-D video processing, which generates or results in a maximum power consumption of 25W, the cooling system and the PSU of the computer system will, upon detecting such a high power video processor card, ensure that sufficient power is made available by the PSU and that sufficient cooling is provided for the video processor by the cooling system respectively. However, the power consumption of such a high power video processor is unlikely to reach a full 25W in all situations but for actually performing such computationally intensive 3-D rendering or the like. Therefore, for example, when the computer system is being used to run a word processing application or is standing "idle", the current video processing activities do not justify such a high level or onerous degree of cooling. There are other PCI cards such as, for example, a RAID card, that exhibit high power consumption only during specific activities such as disc accesses. For the remainder of the time, such cards do not require the PSU to make the maximum power available and do not require the cooling system to accommodate such high power consumptions.

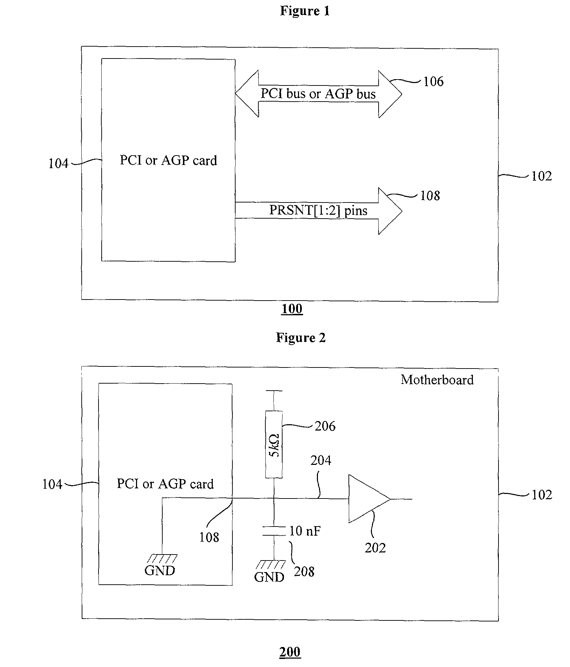

Figure 1 shows, schematically, an assembly 100 of a motherboard 102 and a PCI or AGP card 104. The card 104 communicates with the motherboard 102, that is, the remainder of the chip set (not shown) of the motherboard, via a PCI bus 106, which is dynamic and used for controlling the operation of the card and interacting with the card 104. Two static pins, PRSNT [1:2] 108, are used to inform the motherboard 102 of the power consumption requirements of the PCI or AGP card 104.

Figure 2 shows the electrical aspects 200 of the assembly of figure 1. The PRSNT pins 108 are both connected to the motherboard 102 via a buffer 202. The input 204 to the buffer 202 is connected to V_{CC} via a 5kΩ resistor 206 and to ground via a 10nF capacitor 208. This pin is left floating or is tied to ground according to the maximum power consumption of the card. It will be appreciated, for the purposes of clarity only, that the electrical configuration for a single one of the PRSNT pins 108 has been shown. However, it will be appreciated by those skilled in the art that the same configuration applies to both of the PRSNT [1:2] pins 108.

Table 1 below shows the current PCI 2.3 specification "present signal" definition for the signals carried by the PRSNT pins 108 that indicate whether or not a PCI or AGP card is present and, if so, provide an indication of the maximum power consumption class of that card.

**Table 1**

| PRSTN1# | PRSTN2# | ADD-IN CARD CONFIGURATION |
|---|---|---|
| Open | Open | Add-in Card not present |
| Ground | Open | Add-in card present, 25W maximum |
| Open | Ground | Add-in card present, 15W maximum |
| Ground | Ground | Add-in card present, 7.5W maximum |

It can be appreciated from table 1 that the PCI 2.3 specification arranges for the PCI or AGP add-in card to provide an indication of its presence and an indication of its maximum power consumption to the motherboard.

As mentioned above, a significant limitation of the prior art is that the PCI 2.3 specification provides for the cards to supply an indication of their maximum power consumption requirements. The specification does not accommodate dynamic changes in the actual power consumption or cooling requirements of those cards.

It is an object of embodiments of the present invention at least to mitigate some of the problems of the prior art.

### Summary of the Invention

Accordingly, a first aspect of embodiments provides an arrangement for a computer system; the arrangement comprising at least one terminal to output dynamic information relating to a first operating characteristic of the arrangement; and circuitry, using the at least one terminal, to produce the output signal bearing the dynamic information associated with the first operating characteristic of the arrangement.

Preferably, there is provided an arrangement comprising further circuitry to output, via the at least one terminal, static information relating to a second operating characteristic of the arrangement.

Advantageously, the current power consumption or cooling requirements of a card can be supplied to the PSU or the cooling system dynamically, that is, in a real-time manner. Therefore, the PSU can manage the power requirements, and, in turn, its own operation in light of the actual power requirements of the card or computer system. Alternatively or additionally, the cooling system can be used more efficiently since it can be arranged to respond to the actual cooling requirements of the computer system, that is, of any PCI or AGP cards that are present, rather than operating according to an anticipated maximum. It will be appreciated that additional benefits of embodiments of the present invention might include reduced acoustic noise and power saving, since the cooling system fan might be operating at a reduced level or a further power saving attributed to the PSU being operated according to actual power requirements rather than anticipated maximum power requirements.

In preferred embodiments, the circuitry comprises means to produce the output signal as a pulse width modulated signal; the duty cycle of which provides the dynamic information. Preferably, the means to produce the output signal as a pulse width modulated signal is responsive to an input signal. Still more preferably, the means to produce the output signal as a pulse width modulated signal is responsive to an input signal receivable from a motherboard via a second terminal.

The information relating to the first operating characteristic might relate to, for example, temperature or current power consumption. Therefore, embodiments provide an arrangement in which the circuitry comprising the means to produce the output signal comprises a measurement device such that the output signal bearing information associated with at least the first operating characteristic is derived from the measurement device. Preferred embodiments provide an arrangement in which the measurement device is a temperature measurement device and the first operating characteristic is a current temperature of the at least one device of the arrangement.

Embodiments are provided in which the circuitry comprises a comparator for comparing an output of the measurement device with an input signal to produce a signal having a variable duty cycle indicative of the first operating characteristic. It will be appreciated that while the comparator, and other components of the circuits contained within or on the card, can be implemented using discrete or integrated components, other implementations are possible. For example, the circuitry might comprise a mixture of hardware and software for implementing the comparison operation.

There are many computer systems in existence that will not be arranged to exploit the additional functionality offered by embodiments of the present invention. Also, for those that can exploit such additional functionality, there will still exist cards that do not offer such additional functionality. Therefore, preferred embodiments provide an arrangement in which the circuitry to produce the output signal bearing the dynamic information is responsive to a further signal to switch the arrangement between two operating states in which the static information and dynamic information are produced. Preferably, the circuitry is arranged to receive the further signal via the at least one terminal. In preferred embodiments, the at least one terminal comprises at least one of PRSNT1 and PRSNT2 pins according to a PCI specification.

Arrangements are provided in which the second operating characteristic is current power consumption. Preferably, arrangements are provided in which the first operating characteristic is a current temperature.

It will be appreciated that a computer system might comprise a number of PCI or AGP cards. Suitably, preferred embodiments provide an arrangement further comprising a combiner to derive the output signal bearing the dynamic information from at least two output signals bearing respective dynamic information.

A preferred realisation of embodiments of the present invention is in the form of a plug-in card. Accordingly, embodiments provide a card for a computer system comprising an arrangement as claimed in any preceding claim.

Preferably, embodiments provide a motherboard comprising an arrangement according to embodiments described herein and means, responsive to at least the output signal bearing the dynamic information, to produce an input signal for a first unit operable according to that input signal.

In preferred embodiments, the first unit comprises a cooling system operable, in response to the input signal, to provide a corresponding cooling capacity; and in which the output signal bearing the dynamic information comprises temperature information.

In alternative embodiments, the first unit, additionally or severally, comprises a power supply system operable, in response to the input signal, to provide a corresponding output power; and in which the output signal bearing the dynamic information comprises power requirement information.

Embodiments provide a motherboard further comprising means to supply the arrangement with a waveform having a predeterminable characteristic. Preferably, the waveform having the predeterminable characteristic is a triangular waveform.

Again, compatibility between embodiments of the present invention and the prior art might be desirable. Suitably, embodiments provide a motherboard further comprising means to generate a signal for causing the arrangement to switch between first and second modes of operation producing static and dynamic information respectively.

Preferably, embodiments provide an assembly comprising a motherboard according to embodiments of the present invention connected to an arrangement according to embodiments of the present invention.

Preferred embodiments provide a computer system comprising such an assembly contained within a housing.

### Brief Description of the Drawings

Embodiments of the present invention will now be described, by way of example only, with reference to the accompanying drawings in which:
figure 1 shows, schematically, relevant portions of a computer system;
figure 2 shows, schematically, the electrical assembly of the portions of the computer system shown in figure 1;
figure 3 shows, schematically, an electrical assembly for an add-in card according to a first, basic, embodiment;
figure 4 shows a PCI or AGP card and motherboard assembly according to an embodiment;
figure 5 depicts graphs of signals according to an embodiment;
figure 6 illustrates the two-state nature of the PCI or AGP and motherboard assembly according to power-up and dynamic modes of operation;
figure 7 illustrates a further embodiment;
figure 8 shows graphs of signals for dynamic power or cooling management for a 15W card;
figure 9 shows graphs of signals for dynamic power or cooling management for a 7.5W card;
figure 10 shows graphs of signals for dynamic power or cooling management for a 25W card;
figure 11 illustrates graphs for detecting compatibility between embodiments of the present invention and the prior art;
figure 12 also illustrates graphs for detecting compatibility between embodiments of the present invention and the prior art;
figure 13 shows an assembly comprising a number of cards according to an embodiment; and
figure 14 depicts the signals associated with the embodiment shown in figure 13.

### Detailed Description of the Preferred Embodiments

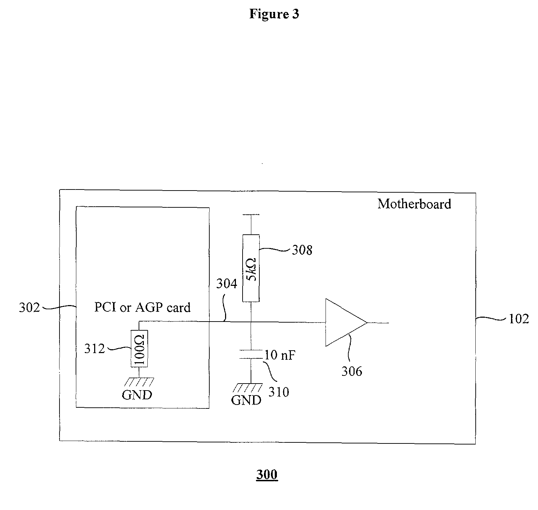

Figure 3 shows the electrical assembly 300 of a PCI or AGP card according to an embodiment of the present invention and a motherboard 102. It will be appreciated that only one 304 of the PRSNT pins is illustrated rather than the two PRSNT [1:2] pins 108 shown in figure 1. This is for the purposes of clarity only. It will be appreciated that the circuit shown in figure 3 is equally applicable to both PRSNT pins. The pin 304 is connected to a respective buffer 306 that has its input connected to V_{CC} via a 5KΩ resistor 308 and is connected to ground via a 10nF capacitor 310. Within, or on, the PCI or AGP card 302, the pin 304 is grounded via a 100Ω resistor 312. Replacing the direct ground connection of the prior art PCI or AGP cards with a pull-down 100Ω resistor achieves the same signalling effect as shown above in table 1 while concurrently allowing a further signal to be transmitted via the pin 304. Therefore, embodiments of the present invention, rather than leaving the pin 304 floating or being connected to ground directly, leave the pin floating or connected to ground via the 100Ω resistor 312 according to the signalling requirements of the PCI or AGP card 302. Hence, table 1 above is modified as shown in table 2 for embodiments of the present invention.

| PRSTN1# | PRSTN2# | ADD-IN CARD CONFIGURATION |
|---|---|---|
| Open | Open | Add-in Card not present |
| Grounded by 100Ω resistor | Open | Add-in card present, 25W maximum |
| Open | Grounded by 100Ω resistor | Add-in card present, 15W |
| Grounded by 100Ω resistor | Open | Add-in card present, 7.5W maximum |

It will be appreciated that the arrangement shown in figure 3 assists in maintaining compatibility between motherboards that can accommodate dynamic power management or dynamic cooling according to embodiments of the present invention and those that cannot, that is, those that expect a PCI or AGP card according to embodiments and a conventional PCI or AGP card such as shown in, and described with reference to, figures 1 and 2 respectively.

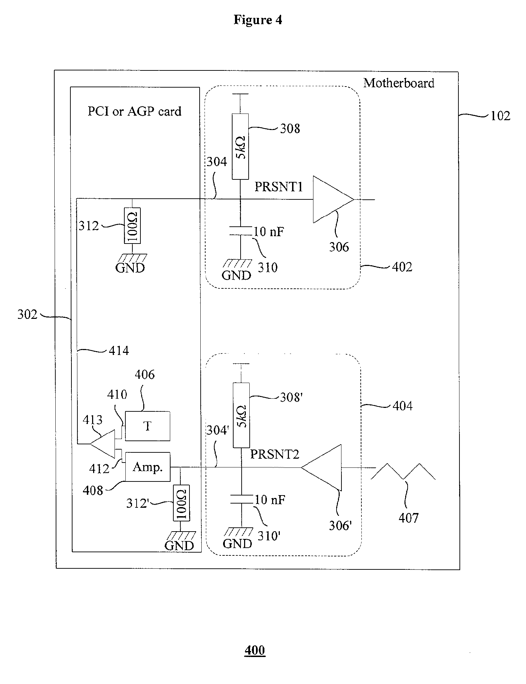

Referring to figure 4, there is shown an assembly 400 comprising the PCI or AGP card 302 together with circuits 402 and 404 for the first PRSNT pin 304 and the second PRSNT pin 304' respectively. The first and second PRSNT pins 304 and 304' represent embodiments of terminals. The first pin PRSNT 304 provides an indication to the motherboard 102 of the current temperature of the PCI or AGP card. The current temperature information or status is provided by the duty cycle of the signal output via the first PRSNT pin 304. The duty cycle is used to convey the temperature information in preference to a conventional analogue signal level since using the duty cycle has greater noise immunity as compared to using a conventional analogue threshold signal level together with a comparator detecting the level of that analogue signal. It can be seen that the circuit 402 comprises the 5kΩ resistor 308, the buffer 306 and the 10nF capacitor 310 as described above in relation to figure 3. Similarly, the circuit 404 also comprises a respective buffer 306', a 5kΩ resistor 308' and a 10nF capacitor 310'.

It can be seen that each of the pins 304 and 304' have respective 100Ω resistors 312 and 312'. The PCI card 302 comprises a temperature measurement device 406. The temperature measurement device 406, in preferred embodiments, is located next to the most critical component of the card, and in some implementations can even be included in the silicon of the AGP or PCI card processor as a thermal diode on the PCI or AGP card 302. Therefore, in the case of an AGP card, the temperature measurement device 406 would be placed adjacent to, or form part of, the video processor (not shown). It will be appreciated that this will provide a reasonably accurate indication of the operating temperature of the video processor.

The motherboard 102 is arranged to supply a triangular-shaped signal 407 to the PCI or AGP card 302 via the buffer 306' connected to the second PRSNT pin 304'. The frequency of the triangular-waveform is preferably between 100 hertz and 1 kilohertz. This frequency range is preferred since it is desirable that the triangle signal is not modified significantly by the RC (5k, 10nF) filter. Hence, the maximum frequency is substantially 10kHz and the minimum frequency is defined to be other than zero, that is, other than a continuous value. An optional amplifier 408 is provided on the PCI card 302 to scale the triangular waveform 407 before using that waveform 407 to perform a comparison between a signal 410 output from the temperature measurement device 406 and the output 412 of the amplifier 408. Preferably, the comparison is performed using a comparator 413. The output 414 of the comparator 413 is connected to the first PRSNT pin 304. The signal (not shown) carried by this output 414 has a variable duty cycle. The duty cycle varies according to the current temperature detected by the temperature measurement device 406. The output signal (not shown) is forwarded to the motherboard 102 via the buffer 306. Therefore, it can be appreciated that dynamic temperature information related to a current operating temperature of the PCI or AGP card 302 can be provided by that card 302 to the motherboard 102 for subsequent processing. The subsequent processing might include adjusting the level of operation of the cooling system or PSU of the computer system.

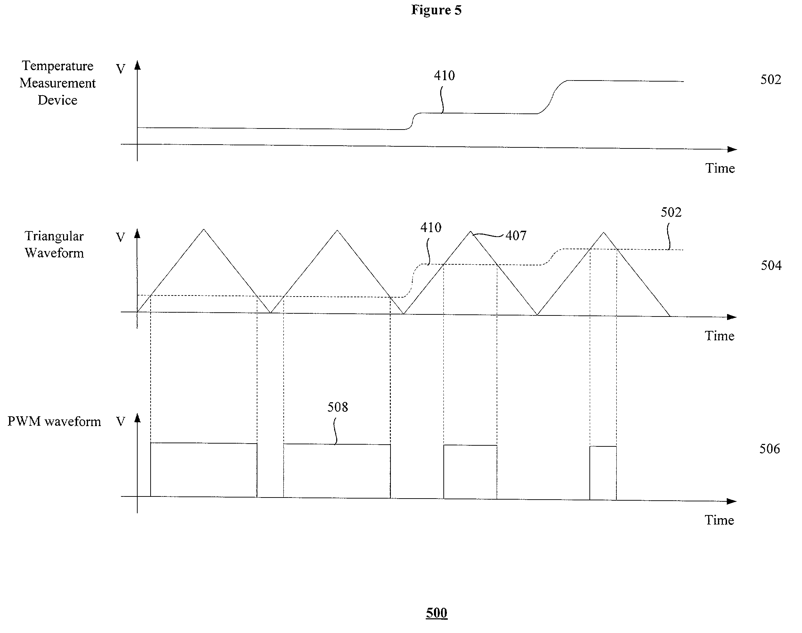

Referring to figure 5, there is shown, for the purpose of illustration only, a number of graphs 500 including a graph 502 of the output signal 410 of the temperature measurement device 406 with time, which shows a normal temperature variation; a graph 504 showing the triangular waveform 407 fed from the motherboard to the PCI or AGP card 302, with the output signal 410 of the temperature measurement device 406 superimposed; and a graph 506 showing a pulse width modulation signal or variable duty cycle signal 508 that provides an indication to the motherboard, via the first PRSNT pin 304, of the current temperature of the PCI or AGP card 302. It can be appreciated that the pulse width or duty cycle of the waveform 508 shown in the pulse width modulation waveform graph 506 also varies as the temperature varies. In the particular embodiment shown, as the temperature of the PCI or AGP card increases, the duty cycle of the pulses shown in the PWM waveform graph 506 decreases.

Therefore, the PWM waveform graph 506 can be used to vary the operation or effectiveness of the cooling system to accommodate, dynamically, actual variations in power consumption or temperature of the PCI or AGP card 302. It can be appreciated that accommodating dynamic temperature measurement of a PCI or AGP card 302 has been achieved while maintaining compatibility with the PCI 2.3 specification PRSNT pin requirements.

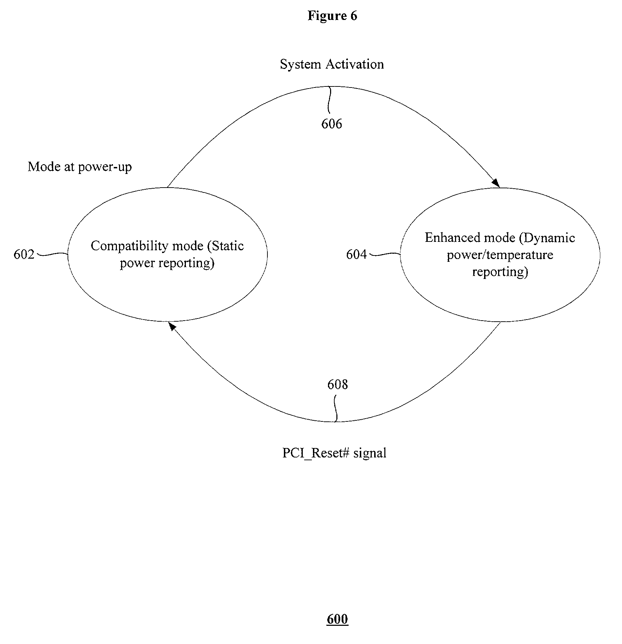

It will be appreciated from table 1 that, within the context of the current PCI specification, one of the two pins 108 is necessarily tied to ground. Therefore, embodiments of the present invention use the fact that the two pins 108 in the prior art are never both high together. It will be appreciated, however, that there is still a need for the PCI card 302 to make its presence known to the motherboard regardless of whether or not the motherboard can accommodate the dynamic temperature measurement of a PCI card according to embodiments of the present invention. Therefore, referring to figure 6, it can be appreciated that the computer system and the PCI card have two states 602 and 604 between which the computer system or PCI card can transition via a system activation transition 606 and a PCI_reset# signal transition 608. Within the first state 602, the PCI card operates as a conventional card in that it reports its presence and its maximum operating power requirements. This ensures compatibility with both the existing PCI 2.3 specification and motherboards that can accommodate prior art PCI cards only. Once the computer system has been initialised, the PCI card or computer system enters the second state 604 in which dynamic temperature reporting is made effective. The PCI card and a compatible motherboard switch between the two states by undergoing a system activation transition 606. In a preferred embodiment, the motherboard starts, by default, in the compatibility mode 602 and, at a predetermined BIOS step or operation or upon launch of a predetermined driver, undergoes a transition to the enhanced mode 604. The PCI card 302 and a compatible motherboard can transition from the second mode or state 604 of operation to the first state 602 in response to the PCI_reset# signal.

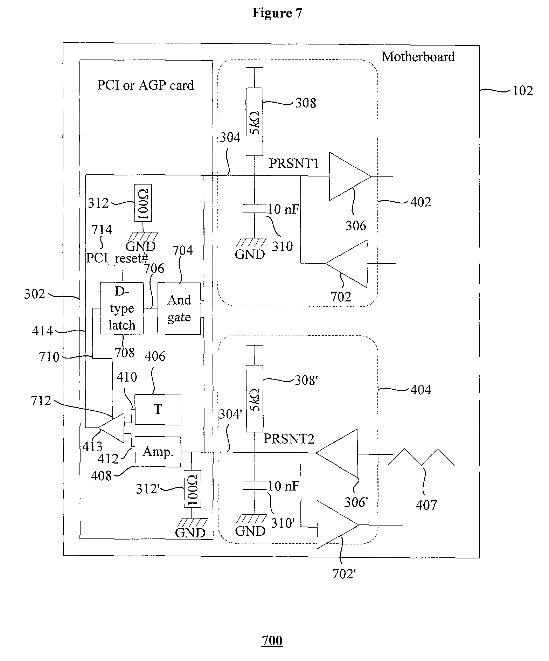

Figure 7 illustrates additional circuitry used to support the two-state mode of operation described in figure 6, that is, to support transitions between a static mode of operation and a dynamic mode of operation. It will be appreciated that the assembly 700 shown in figure 7 has much in common with the arrangement 400 shown in figure 4. Like reference numerals perform substantially the same function and will not be described in detail except where necessary to illustrate the dual-state operation of embodiments of the present invention. It can be appreciated that the circuit 402 shown in figure 7 comprises an additional buffer 702. The additional buffer 702 of the circuit 402 and the existing buffer 306' of the circuit 404 are used to provide a signal to the PCI card that it should enter the dynamic mode of operation or the second state 604. This signal is provided by forcing the two PRSNT pins 304 and 304' high via the buffers 702 and 306'. An AND gate 704 is used to detect the presence of the high signals fed via buffers 702 and 306'. The AND gate 704 produces a 1, or high output signal, in response to the high inputs to the buffers 702 and 306'. The output 706 from the AND gate 704 is latched using a D-type latch 708. The output 710 of the D-type latch 708 is connected to an output enable pin 712 of the comparator 413. The output enable pin 712 controls the operation of the comparator 413 such that, when the output signal 710 of the D-type latch 708 assumes a predetermined state, the output of the comparator 413 is enabled, which allows the PCI card 302 to commence temperature reporting. It will be appreciated by one skilled in the art that the PCI card 302 will operate as a conventional PCI card in the absence of the PRSNT pins 304 and 304' being forced high. Therefore, if the PCI card is plugged into a PCI slot of a conventional motherboard that does not expect dynamic temperature information, that motherboard will also not supply the high signals to cause a transition from a conventional mode of operation, or first state 602, to the dynamic temperature reporting mode of operation, or second state 604.

It will be appreciated that an additional buffer 702' is used to retain compatibility with the PCI specification and prior art motherboards by allowing the card 302 to report its operating power statically.

It can be appreciated from figure 7 that, in spite of the presence of the pull-down resistors 312 and 312', the buffers 702 and 306', in response to respective high signals, are arranged to force the PRSNT pins 304 and 304' high. It should be noted that, in preferred embodiments, the comparator 413 should be such that it can sustain a buffer to buffer connection in any logical state during the state transitions. It will be appreciated that, in preferred embodiments, the comparator 413 has a tri-state output until a PCI_RESET# signal 714 is received by the D-type latch.

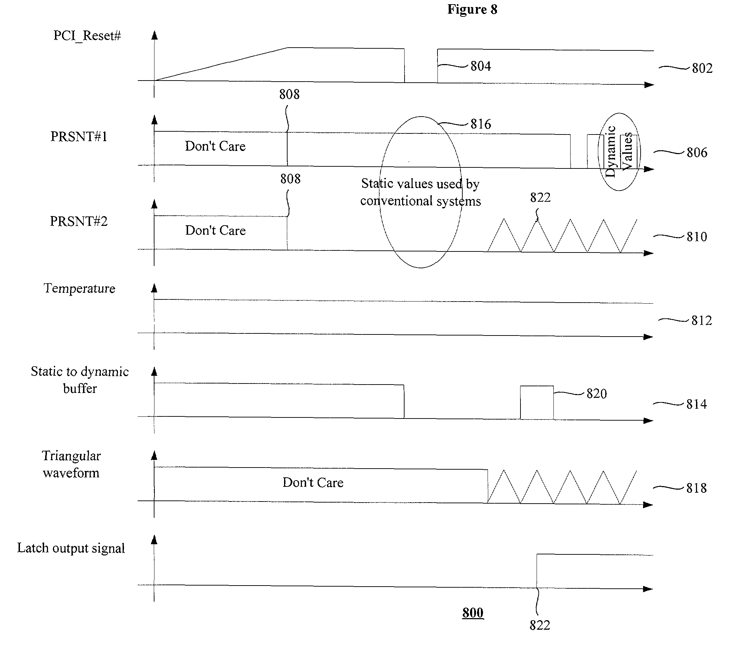

Referring to figure 8, there are shown several graphs 800 of the signals used by the embodiment shown in figure 7 for a 15 watt card. A PCI_RESET graph 802 shows the PCI_RESET# signal 714 slowly ramping up until it reaches a high state whereupon, after a predetermined period of time, a negative going pulse 804 causes the D-type latch 708 to reset. The negative going pulse is an embodiment of the PCI_RESET#signal. During power-up, the first PRSNT pin, is shown by the second graph 806, has a "don't care" state. After power up, at point 808, it assumes a high state. Similarly, the second PRSNT pin as shown by the third graph 810, also has a "don't care state" until a predetermined point in time 808, whereupon the second PRSNT pin 304' assumes a low state. It can be seen from the temperature graph 812 that the temperature is shown, for the purposes of illustration, as being substantially constant. The static-to-dynamic buffer graph 814 reflects the signals applied to the buffers 702 and 306'. In predetermined embodiments, the high signals described above are applied to both buffers 702 and 306'. It can be appreciated that, following the negative going pulse 804 of the PCI_RESET# signal 714, the static values 816 of the first and second PRSNT pins 304 and 304' can be read by the motherboard such as, for example, a motherboard compatible with embodiments of the present invention or a conventional motherboard, to determine that the card is a 15 watt card. The triangular waveform graph 818 shows that the buffer 306' assumes a tri-state until just before a positive going pulse or high signal is applied to the static-to-dynamic buffer 702. It can be seen from the second PRSNT pin graph 810 that the waveform present at that pin follows the triangular waveform applied to the buffer 306'. It can be seen, following the negative going edge of a pulse 820 applied to the static-to-dynamic buffer 702, that the signal on the first PRSNT pin 304 is a pulse width modulated signal reflecting the current operating temperature of the PCI card. The point at which the output of the D-type latch 708 enables the output of the comparator 412 is shown by reference numeral 822 on the second PRSNT pin graph 810, that is, when the signals on the pins 304 and 304' are both high.

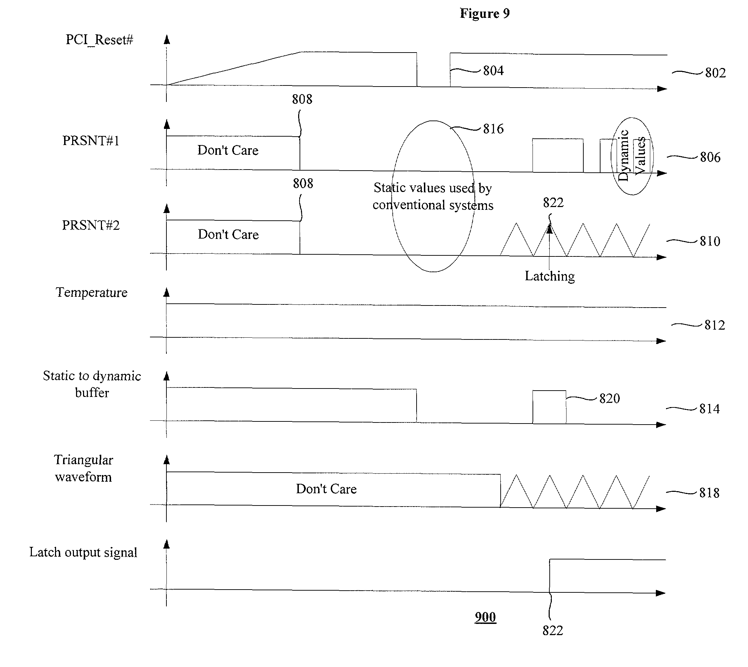

Figure 9 shows graphs 900 similar to those shown in figure 8 but for a 7.5 watt card rather than for a 15W card. Like reference numerals are applied to like features, which perform substantially the same function or have substantially the same characteristics. It will be appreciated that the main differences between figure 9 and figure 8 reside in the graphs 806 and 810 for the first PRSNT and second PRSNT signals, which are both shown as being low during the period when the static information is read 816. It can be appreciated that the point at which the output of the D-type latch 708 enables the output of the comparator 413 is also at the second peak of the triangular waveform as shown by reference numeral 822.

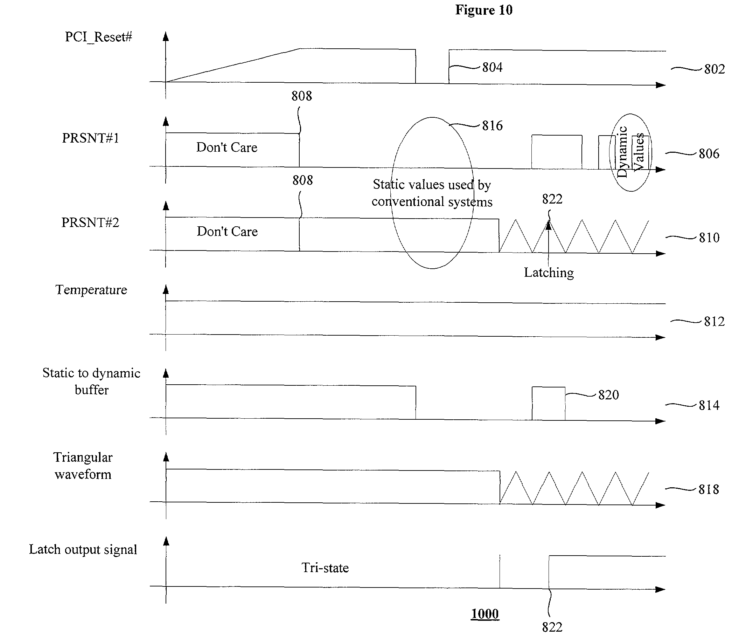

Figure 10 illustrates the signals 1000 for an embodiment of a 25W PCI card. It can be appreciated that the main differences between the signals as shown in figures 9 and 10 are, again, that the static values 816 are low and high to provide an indication to the system that the card is a 25watt card. It can be seen that the output of the D-type latch 708 enables the output of the comparator 413, again, on the second peak of the triangular waveform as indicated by reference numeral 822.

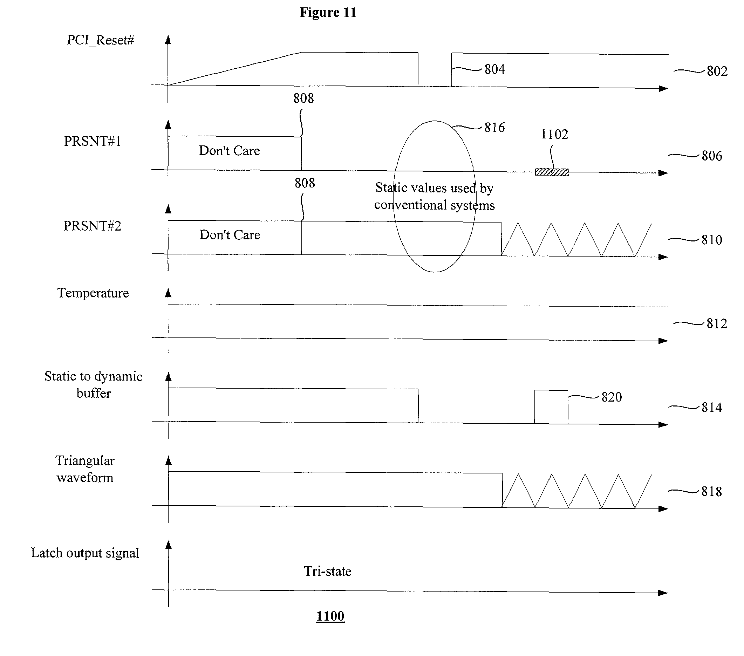

Figure 11 illustrates the signals that result when a conventional PCI card is plugged into a motherboard that expects, or is capable of responding to, dynamic temperature reporting card according to embodiments of the present invention. It can be appreciated that the graphs 1100 shown in figure 11 have much in common with the graphs shown in figures 8, 9 and 10. Therefore, like reference numerals refer to like features and will not be described in detail. The main difference between the graphs 1100 shown in figure 11 and the earlier graphs of figures 8, 9 and 10 resides in the PRSNT graph 806 for the first PRSNT pin 304. It can be seen from the PRSNT graph 806 that an invalid read value 1102 is obtained when the high signal of the static to dynamic buffer 706 is applied. It can be appreciated that if the PCI card was a card in accordance with an embodiment of the present invention, the PRSNT pin would have gone high and produced a pulse width modulated signal as shown in the corresponding graph of figure 10.

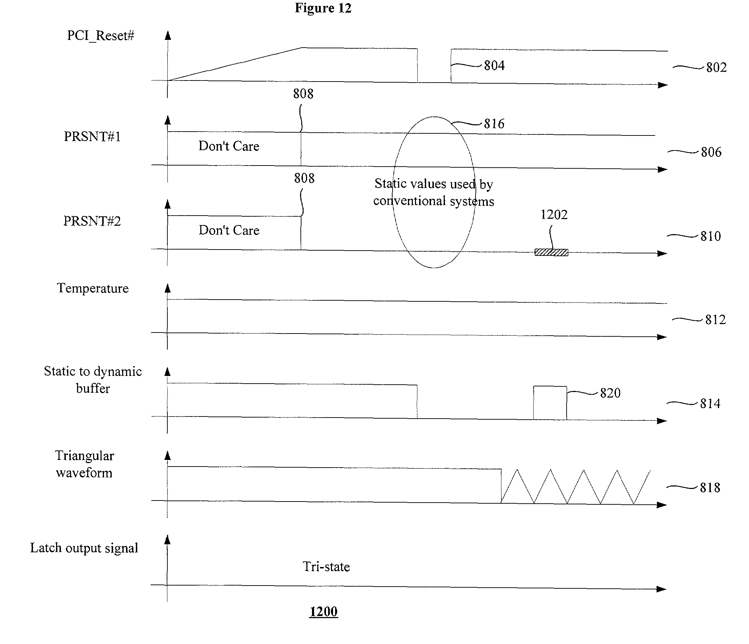

Figure 12 shows graphs 1200 corresponding to those of figure 11 but for a case where the second PRSNT pin 304' is tied low by a direct ground connection. It can be appreciated that a motherboard, following application of the high signal to the static to dynamic buffer 706 or the triangular waveform to the other buffer 306', will detect an invalid signal or read value 1202 at the second pin PRSNT 304' rather than the triangular waveforms as shown in figures 8 and 9.

Using the invalid read signals 1102 and 1202 allows a motherboard in accordance with embodiments of the present invention to determine whether or not a PCI card in accordance with embodiments of the present invention or a prior art PCI card has been placed in a PCI or AGP slot.

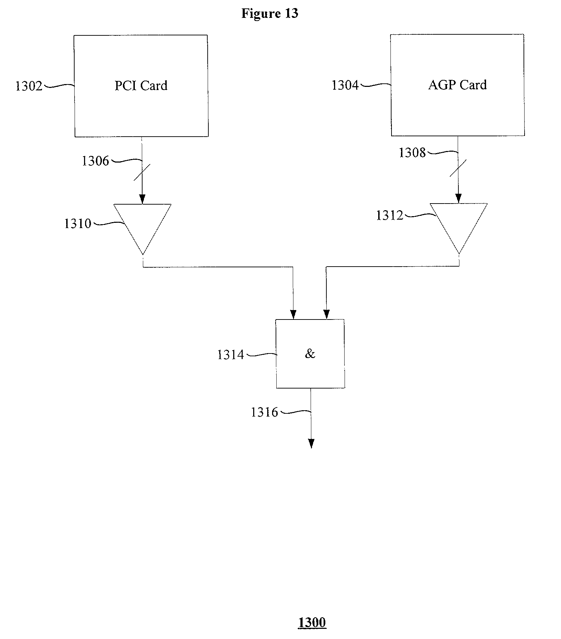

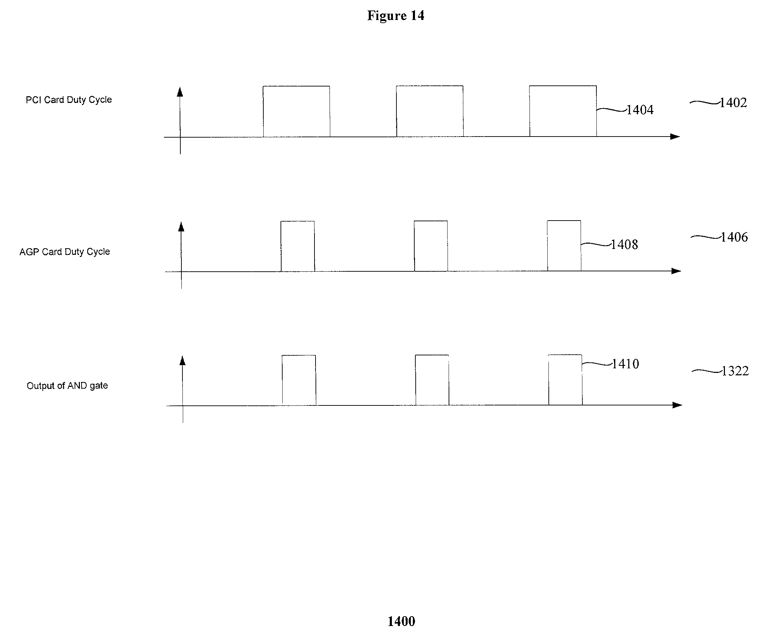

Referring to figure 13, there is shown an assembly 1300 in which a PCI card 1302 and an AGP card 1304 in accordance with the embodiments of the present invention are provided. The outputs of the PRSNT pins 1306 and 1308 of the cards are combined, during the dynamic mode of operation, using respective command buffers 1310 and 1312 and an AND gate 1314. The AND gate 1314 represents an embodiment of a combiner. The output 1316 from the AND gate 1314 is used by the cooling system to control, for example, the fan speed. It will be appreciated, due to the logical gate being an AND gate, that the cooling system responds to the highest demands or cooling requirements of the hottest card. Figure 14 illustrates this principle. The PCI card signal 1402 is shown as having a relatively wide pulse width 1404 as compared to an AGP signal 1406, which is shown as having a relatively narrow pulse width 1408. Therefore, the output 1322 of the AND gate has a duty cycle 1410 corresponding to that of the AGP signal 1406.

Although the above embodiments have been illustrated or described with reference to the triangular waveform 407 being supplied by the motherboard to the PCI or AGP card, embodiments are not limited to such an arrangement. Embodiments can be realised in which the PCI or AGP card is calibrated to generate its own triangular waveform. Still more preferably, embodiments can be realised in which a variable pulse width signal or variable duty cycle signal complying with prescribed regulations or having prescribed specifications is output via the PCI or AGP card. However, preferred embodiments arrange for the motherboard to supply the triangular waveform 407 rather than having each card generate its own waveform, which means that a single triangular waveform generator can be used with several PCI or AGP cards.

The above embodiments have been described within the context of providing dynamic information associated with an operating characteristic of a plug-in card such as, for example, PCI or AGP cards. However, embodiments of the present invention are not limited thereto. Embodiments can be realised in which a chip or chip-set for a motherboard employs the principles described above. Therefore, various arrangements, such as PCI cards, AGP cards, chips or chip-sets can be realised to provide dynamic information associated with an operating characteristic of a device of such PCI cards, AGP cards, chips or chip-sets.

Furthermore, even though the above embodiments have been described with reference to the measurement device being a temperature measurement device, embodiments can be realised in which other measurement devices are used. For example, a Hall effect device might be used to monitor the current being supplied to the arrangement or card to estimate the current being consumed by the card and thereby to estimate the current power consumption of the card or arrangement.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings) and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. An arrangement for a computer system; the arrangement comprising at least one terminal to output dynamic information relating to a first operating characteristic of the arrangement; and circuitry, using the at least one terminal, to produce the output signal bearing the dynamic information associated with the first operating characteristic of the arrangement.

2. An arrangement as claimed in claim 1, in which the circuitry further comprises means to output, via the at least one terminal, static information relating to a second operating characteristic of the arrangement.

3. An arrangement as claimed in either of claims 1 and 2, in which the circuitry comprises means to produce the output signal as a pulse width modulated signal; the duty cycle of which provides the dynamic information.

4. An arrangement as claimed in claim 3, in which the means to produce the output signal as a pulse width modulated signal is responsive to an input signal.

5. An arrangement as claimed in claim 4, in which the means to produce the output signal as a pulse width modulated signal is responsive to an input signal receivable from a motherboard via a second terminal connection.

6. An arrangement as claimed in any preceding claim, in which the circuitry comprising the means to produce the output signal comprises a measurement device such that the output signal bearing information associated with at least the first operating characteristic is derived from the measurement device.

7. An arrangement as claimed in claim 6, in which the measurement device is a temperature measurement device and the first operating characteristic is a current temperature of the at least one device of the arrangement.

8. An arrangement as claimed in either of claims 6 and 7, in which the circuitry comprises a comparator for comparing an output of the measurement device with an input signal to produce a signal having a variable duty cycle indicative of the first operating characteristic.

9. An arrangement as claimed in any preceding claim in which the circuitry to produce the output signal bearing the dynamic information is responsive to a further signal to switch the arrangement between two operating states in which the static information and dynamic information are produced.

10. An arrangement as claimed in claim 9 in which the circuitry is arranged to receive the further signal via at least the at least one terminal.

11. An arrangement as claimed in any preceding claim, in which the at least one terminal comprises at least one of PRSNT1 and PRSNT2 pins according to a PCI specification.

12. An arrangement as claimed in any preceding claim, in which the second operating characteristic is power consumption.

13. An arrangement as claimed in any preceding claim, in which the first operating characteristic is a current temperature.

14. An arrangement as claimed in any preceding claim further comprising a combiner to derive the output signal bearing the dynamic information from at least two output signals bearing respective dynamic information.

15. An card for a computer system comprising an arrangement as claimed in any preceding claim.

16. A motherboard comprising means to receive an arrangement as claimed in any preceding claim and means, responsive to at least the output signal bearing the dynamic information, to produce an input signal for a first unit operable according to that input signal.

17. A motherboard as claimed in claim 16 in which the first unit comprises a cooling system operable, in response to the input signal, to provide a corresponding cooling capacity; and in which the output signal bearing the dynamic information comprises temperature information.

18. A motherboard as claimed in either of claims 16 and 17 in which the first unit comprises a power supply system operable, in response to the input signal, to provide a corresponding output power; and in which the output signal bearing the dynamic information comprises power requirement information.

19. A motherboard as claimed in any of claims 16 to 18, further comprising means to supply the arrangement with a waveform having a predeterminable characteristic.

20. A motherboard as claimed in claim 19 in which the waveform having the predeterminable characteristic is a triangular waveform.

21. A motherboard as claimed in any of claims 16 to 20 further comprising means to generate a signal for causing the arrangement to switch between first and second modes of operation producing static and dynamic information respectively.

22. An assembly comprising a motherboard as claimed in any of claims 16 to 21 and an arrangement as claimed in any of claims 1 to 15.

23. A computer system comprising an assembly as claimed in claim 22 contained within a housing.
